Europäisches Patentamt

European Patent Office

Office européen des brevets

(11) Publication number: **0 226 393**
**A2**

# EUROPEAN PATENT APPLICATION

(21) Application number: **86309437.1**

(22) Date of filing: **04.12.86**

(51) Int. Cl.4: **H02G 15/184**

(30) Priority: **04.12.85 GB 8529828**

(43) Date of publication of application:
**24.06.87 Bulletin 87/26**

(84) Designated Contracting States:
**BE DE ES FR GB IT NL SE**

(71) Applicant: **PIRELLI GENERAL plc**
**40 Chancery Lane**
**London WC2A 1JH(GB)**

(72) Inventor: **Ball, Edmund Hugh**
**7 Bassett Wood Drive**
**Southampton(GB)**

(74) Representative: **Simpson, Ronald Duncan**
**Innes et al**
**A.A.Thornton & Co. Northumberland House**
**303-306 High Holborn**
**London WC1V 7LE(GB)**

(54) **Improvements in or relating to electric cable joints.**

(57) A straight joint between two electric cables whose conductors 6 are provided with extruded polymeric insulation 4 includes a moulded joint sleeve 1 comprising polymeric insulating material and having an internal diameter greater than the external diameter of the insulation 4 and two moulded adaptor sleeves 5 comprising polymeric insulating material and fitted over the cable insulation 4 and within the joint sleeve 1. The polymeric insulating material of the adaptor sleeves has a higher permittivity than that of the polymeric insulating material of the joint sleeve and that of the cable insulation and this results in reduction of the maximum longitudinal electrical stress which arises at the interfaces between the adaptor sleeves and the joint sleeve and the cable insulation than is the case where the permittivity of the polymeric insulating material of the adaptor sleeves is not higher than that of the joint sleeve and that of the cable insulation.

## IMPROVEMENTS IN OR RELATING TO ELECTRIC CABLE JOINTS

This invention relates to straight joints between two electric cables whose conductors are provided with polymeric insulation.

It is well-known to utilise moulded sleeves when making straight joints between two electric cables whose conductors are provided with extruded polymeric insulation.

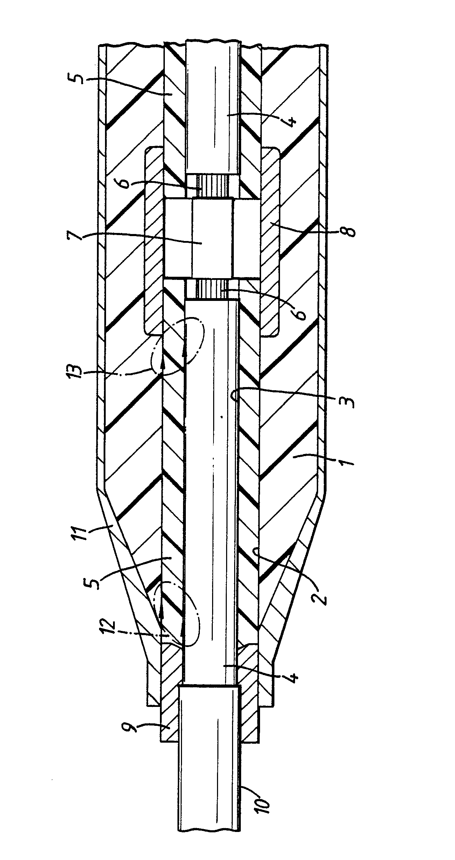

As illustrated in the accompanying drawing, which shows part of a typical joint in a part-finished state, in such joints a moulded joint sleeve 1 comprising polymeric insulating material and whose internal diameter 2 is greater than the external diameter of the cables and accordingly greater than the external diameter 3 of the extruded polymeric insulation 4 of the cables fits over respective moulded sleeves 5 which also comprise polymeric insulating material and which are fitted over the cable insulation 4 at the prepared ends of the cables to be joined.

In order to make the illustrated joint, the joint sleeve 1 is first fitted over the prepared end of one of the cables and passed along that cable until clear of the exposed polymeric conductor insulation 4 thereof. The sleeves 5, which are known as adaptors, are then fitted over the insulation 4 of the prepared cable ends and the conductors 6 of the prepared cable ends are mechanically and electrically interconnected by means such as a compression ferrule, illustrated at 7. Heat transfer elements (not shown) may be disposed around the ferrule, and thereafter the joint sleeve 1 is slid into its final position, as illustrated, in which it extends over the two sleeves 5 in contact with the external surfaces thereof. The joint is then completed by operations well-known in the art and which do not require discussion here.

Typically, in order to control electric stress distribution, the joint sleeve 1 is provided internally with an integral field deflector 8 made of a semiconductive material, and each sleeve 5 is provided with an integral semi-conductive end portion 9 which is disposed remotely from the ferrule 7 and which is contacted internally by a semi-conductive layer 10 on the conductor insulation 4 of the prepared cable end on which the sleeve 5 is fitted and externally by an outer, integral semi-conductive layer 11 of the joint sleeve 1.

The electrical strength of joints such as those illustrated in the drawing which utilise moulded 'adaptor' sleeves and a moulded joint sleeve depends on a number of factors. The electrical strength within the moulded sleeves depends on the properties of the material from which the sleeves are moulded and the quality of the mouldings -that is their freedom from porosity and/or contaminants. At the interfaces between the adaptor sleeves and the cable insulation and between the adaptor sleeves and the joint sleeve electrical stresses will arise and have radial and longitudinal components with respect to the axis of the joint. Any surface defects at these interfaces will give rise to the possibility of air inclusions and thus the possibility of electrical discharges occurring if the electrical stress at the interfaces is high enough. In this connection, it is the longitudinal component of the electrical stress which is significant since surface defects at the interfaces tend to be much longer in the longitudinal direction than the radial direction and hence the joint is normally electrically weaker in the longitudinal direction at these interfaces than the radial direction.

In order to reduce the possibility of such electric discharges occurring the radial pressure at the interfaces could be increased by increasing the usual interference fit between the adaptor sleeves and the conductor insulation and the adaptor sleeves and the joint sleeve to reduce the presence of air inclusion at these interfaces. However, such a measure would make assembly of the joint more difficult.

An object of the present invention is to reduce the possibility of electrical discharges occurring at the above-mentioned interfaces without necessarily having to increase the radial pressure at these interfaces by reducing the longitudinal electrical stresses which arise at these interfaces. This we have found can be achieved by moulding the adaptor sleeves with a polymeric insulating material which has a higher permittivity than that of the polymeric insulating material of the joint sleeve and that of the polymeric insulation of the cables being jointed.

The invention includes a kit for use in making a straight joint between two electric cables whose conductors are provided with polymeric insulation, said kit comprising a moulded joint sleeve comprising polymeric insulating material and having an internal diameter greater than the external diameter of the polymeric insulation of the cables to be jointed and two moulded adaptor sleeved each comprising polymeric insulating material and adapted to fit over the polymeric insulation of the cables and within the joint insulating sleeve, the polymeric insulating material of the adaptor sleeves having a higher permittivity than that of the polymeric insulating material of the joint sleeve.

The invention also includes a straight joint between two electric cables whose conductors are provided with polymeric insulation, said joint including a moulded joint insulating sleeve comprising polymeric insulating material and having an internal diameter greater than the external diameter of the polymeric insulation of the cables, and two moulded adaptor sleeves comprising polymeric insulating material and fitted over the polymeric insulation of the cables and within the joint sleeve, the polymeric insulating material of the adaptor sleeves having a higher permittivity than that of the polymeric insulating material of the joint sleeve and that of the polymeric insulation of the cables.

In order that the invention may be better understood, an embodiment thereof, which is given by way of example only will now be given, reference being made to the joint shown in the accompanying drawing and already discussed.

We have found that in a joint such as that shown in the drawing the maximum longitudinal electrical stresses at the interfaces between the adaptor sleeves 5 and the cable insulation 4 and the joint sleeve 1 occur near the ends of the adaptor as indicated by circles at 12 and 13 on the left-hand adaptor sleeve in the drawing. For example, for a typical joint design for 33 kV cables whose conductors are provided with extruded polymeric insulation, the maximum longitudinal electrical stress at an impulse withstand level of 195 kV occurs at the interfaces near the field deflector 8 in the region circled 13 and has a value of 7.1 kV/mm when the polymeric insulating material of the adaptor sleeves and joint sleeve comprises an ethylene-propylene rubber having a permittivity of 2.6 as typically used heretofore. In a joint embodying the present invention, the permittivity of the polymeric insulating material of the adaptor sleeve is markedly increased to 22 and the maximum longitudinal electrical stress under the same test conditions is 4.2 kV/mm, i.e. a reduction of over 40%.

The permittivity of 22 given in the above embodiment is to be taken as only an example, but preferably the permittivity of the polymeric insulating material of the adaptor sleeves is of the order of 15 to 30. The permittivity of the polymeric insulating material of the adaptor sleeves is preferably markedly more, for example at least 15 more than that of the polymeric insulating material of the joint sleeve and/or the polymeric conductor insulation of the cables.

A suitable polymeric insulating material for the adaptor sleeves is an ethylene/propylene rubber compound to which carbon black has been added so that the resulting permittivity of the material is in the range 15 to 30.

The above-described joint embodying the invention is not only suitable for medium voltage cables (i.e. 10 kV to 30 kV) but can be utilised for connecting higher voltage cables because of the reduction in the longitudinal electrical stress which arises at the interfaces of the adaptor sleeves and joint sleeve and cable insulation respectively.

## Claims

1. A kit for use in making a straight joint between two electric cables whose conductors are provided with polymeric insulation, said kit comprising a moulded joint sleeve comprising polymeric insulating material and having an internal diameter greater than the external diameter of the polymeric insulation of the cables to be jointed and two moulded adaptor sleeves each comprising polymeric insulating material and adapted to fit over the polymeric insulation of the cables and within the joint insulating sleeve, the polymeric insulating material of the adaptor sleeves having a higher permittivity than that of the polymeric insulating material of the joint sleeve.

2. A kit as claimed in claim 1, wherein the permittivity of the adaptor sleeve polymeric insulating material is 15 to 30.

3. A kit as claimed in claim 1, wherein the permittivity of the adaptor sleeve polymeric insulating material is at least 15 more than the permittivity of the joint sleeve polymeric insulating material.

4. A kit as claimed in any one of the preceding claims, wherein the adaptor sleeve polymeric insulating material comprises an ethylene-propylene rubber compound to which carbon black has been added.

5. A straight joint between two electric cables whose conductors are provided with polymeric insulation, said joint including a moulded joint insulating sleeve comprising polymeric insulating material and having an internal diameter greater than the external diameter of the polymeric insulation of the cables, and two moulded adaptor sleeves comprising polymeric insulating material and fitted over the polymeric insulation of the cables and within the joint sleeve, the polymeric insulating material of the adaptor sleeves having a higher permittivity than that of the polymeric insulating material of the joint sleeve and that of the polymeric insulation of the cables.

6. A joint as claimed in claim 5, wherein the permittivity of the adaptor sleeve polymeric insulating material is 15 to 30.

7. A joint as claimed in claim 5, wherein the permittivity of the adaptor sleeve polymeric insulating material is at least 15 more than the permittivity of the joint sleeve polymeric insulating material.

8. A joint as claimed in claim 5, 6 or 7, wherein the adaptor sleeve polymeric insulating material comprises an ethylene-propylene rubber compound to which carbon black has been added.